(19) **Europäisches Patentamt**

**European Patent Office**

**Office européen des brevets**

(11) **EP 1 544 645 A1**

(12) **EUROPEAN PATENT APPLICATION**
published in accordance with Art. 158(3) EPC

(43) Date of publication:
**22.06.2005 Bulletin 2005/25**

(51) Int Cl.⁷: **G02B 6/10**

(21) Application number: **03792770.4**

(22) Date of filing: **21.08.2003**

(86) International application number:
**PCT/JP2003/010571**

(87) International publication number:
**WO 2004/019091 (04.03.2004 Gazette 2004/10)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **22.08.2002 JP 2002241798**

(71) Applicant: **Showa Electric Wire and Cable Co.,Ltd.**
**Kawasaki-shi, Kanagawa 210-0843 (JP)**

(72) Inventors:
• **SHISHIDO, Kanji,**
  **Showa Elec. Wire & Cable Co., Ltd**
  **Kawasaki-shi, Kanagawa 210-0843 (JP)**

• **ISHIKAWA, Hiroshi,**
  **Showa Elec. Wire & Cable Co Ltd**
  **Kawasaki-shi, Kanagawa 210-0843 (JP)**
• **NAKAMURA, Masahiro,**
  **Showa Elec Wire & CableCo Ltd**
  **Kawasaki-shi, Kanagawa 210-0843 (JP)**
• **MORITA, Kazuaki,**
  **Showa Elec. Wire & Cable Co. Ltd**
  **Kawasaki-shi, Kanagawa 210-0843 (JP)**

(74) Representative: **Glawe. Delfs. Moll**
**Patentanwälte**
**Postfach 26 01 62**
**80058 München (DE)**

(54) **PSEUDO SLANT FIBER BRAGG GRATING, MULTIPLE SERIES FIBER BRAGG GRATING, OPTICAL FIBER TYPE COUPLER AND OPTICAL CONNECTOR**

(57) An optical fiber 4 having a clad diameter of 125 μm is made by adding Ge to a core 41 having a core diameter of 8 μm and a relative refractive index difference of 0.3 %, and two refractive index grating portions 41a and 41b having a slant angle of 2° are formed in series in the optical fiber 4 by a phase mask method using KrF excimer laser (λ = 248 nm). The central period (2A) of the phase mask of a chirped grating is 1,140 nm, the chip rate (C) of the period is 1.2 nm/mm, the length (G) of the first and second index grating portions 41a and 41b is 8 mm, the effective refractive index of the first and second index grating portions 41a and 41b is 1.447, the refractive index modulation is 3 x 10⁻³, and the gap between the first and second index grating portions 41a and 41b is 1 mm.

Fig. 3

EP 1 544 645 A1

**Description**

Technical Field

The present invention relates to a quasi slanted fiber Bragg grating, a multiple series Bragg grating, an optical fiber type coupler and an optical connector and, more particularly, to a quasi slanted fiber Bragg grating, a multiple series Bragg grating, an optical fiber type coupler and an optical connector, which are useful in a WDM (Wavelength Division Multiplexing) transmission system for separating desired signal light from a superposed signal group or the like.

Background Art

In recent years, the WDM transmission system has been noted as a system for transmitting a mass volume of information. This WDM transmission system transmits signal light or test light of plural wavelengths multiplexly through one optical fiber. The transmission side has to use an optical coupler for composing the individual signal light and test light, and the reception side has to use an optical divider for dividing the individual signal light and an optical blocking filter for blocking unnecessary signal light.

In the prior art, this optical composer, optical divider or optical blocking filter has been exemplified by a dielectric multi-layer filter or a fiber Bragg grating (as will be called the "FBG").

In a system using the dielectric multi-layer filter, this dielectric multi-layer filter is either inserted between the optical fibers and fixed with an adhesive or clamped between connectors. Therefore, this system may be troubled under a severe temperature environment or may be changed in characteristics.

In the system using the FBG, on the other hand, there has been practiced a chirped FBG having a blocking band of 10 to 20 nm and a blocking quantity of about 20 dB. However, this system has failed to practice a filter of a high blocking quantity (e.g. , 40 dB or more), for which needs have raised. Still the worse, there is a difficulty that the degree of freedom for the system design cannot be improved.

As the method for achieving a large blocking quantity in the chirped FBG system, there has been devised: (1) the method (as will be called the "low chirp rate FBG method") for making the chirp rate (i.e., the changing rate of a lattice gap $\Lambda$) gentle; and (2) the method (as will be called the "two-step connection method") for forming two chirped FBGs having the same construction and a blocking quantity of about 2 to 30 dB, in series at two steps.

In the low chirp rate FBG method of (1), however, the restriction on the accommodating space makes it difficult to retain a sufficient grating length, so that the practical chirp rate to be executed has a lower limit. In the case the FBG is packaged in the SC type optical PAD connector, for example, it is necessary to set the fiber grating length to about 20 mm or less. It is, however, difficult for the chirp rate necessary for the desired band (10 to 20 nm or more) to mass-produce the FBG having a blocking quantity of 40 dB or more. For one chirped FBG (as will be called the "one-step FBG"), moreover, the reflection outside of the band near the Bragg wavelength is relatively high to raise a difficulty that the usable band is restricted.

On the other hand, there has also be devised a method according to the so-called "slanted fiber Bragg grating" (as will be called the "SFBG"), which is manufactured to have a grating slanted (to have a slant angle of about 4°) with respect to the optical axis. In this system according to the SFBG, however, if the ordinary single mode fiber is employed, the coupling efficiency to the clad (or radiation) mode (as will be simply called the "cladmode") is so low as to make it difficult to achieve a sufficient band blocking quantity. In order to retain a large blocking quantity by the system using the SFBG, therefore, there arises a difficulty that a dedicated fiber having a low action to confine the signal light in the core, such as a fiber having a smaller specific refractive index difference ($\Delta$) than the single mode fiber has to be employed.

Next, the two-step connection method (2) has a difficult that multiplex reflections (i.e., the Fabry-Perot resonance) occur between the two chirped FBGs. Specifically, most of the light having a wavelength equal to the Bragg wavelength of the FBG is reflected by the FBG (as will be called the "front step FBG") arranged on the upstream side with respect to the incoming direction of the light. That is, the optical power is coupled to the fundamental mode of the reverse direction. However, a portion of the light transmits through the FBG at the front step. Moreover, most of the transmitted light is subject to multiplex reflections between the FBG (as will be called the "rear-step FBG") arranged on the downstream side of the front step FBG with respect to the incident direction of the light and the FBG at the front step. As a result, the Fabry-Perot resonance occurs between the two FBGs to make a difficulty that a beat is generated in the spectral characteristics to lower the blocking characteristics.

As the method for preventing the multiplex reflections (i.e., the Fabry-Perot resonance), there has been devised a system using the SFBG. However, this system is troubled by the narrowed usable band, as described hereinbefore. In the case the reflections have to be positively caused at the FBG portion, that is, in the case the system is used with a view to blocking the line monitoring light, there arises a difficulty that the system cannot be employed because of a low reflection factor.

The present invention has been conceived so as to solve the above-specified difficulties, and has an object to provide a quasi slanted fiber Bragg grating (as will be called the "QSFBG"), a multiple series fiber Bragg grating (as will be called the "multiple series FBG"), an optical fiber type coupler and an optical connector, in which the one-step FBG can have intermediate characteristics between those of the FBG and the SFBG, in which a high blocking quantity can be retained by combining the function of the FBG and the function of the SFBG, and in which the multiplex reflections to occur in the case of the two-step connection of the FBGs can be transformed into the clad mode thereby to inhibit the beat generation.

Disclosure of the Invention

In order to achieve that obj ect, according to the invention, there is provided a QSFBG, which comprises a first refractive index grating portion formed on the core of an optical fiber to have a grating vector slanted with respect to the fiber principal axis thereby to reflect incident light selectively with a reflection factor of 90 % or more and to make the loss due to the coupling to a clad mode, less than 5 dB.

According to the invention, there is also provided a QSFBG, which comprises a second refractive index grating portion formed on the core of an optical fiber to have a grating vector slanted with respect to the fiber principal axis thereby to reflect incident light selectively with a reflection factor of 10 % or more and to make the loss due to the coupling to a clad mode, 5 dB or more.

According to these QSFBGs of the invention, the intermediate characteristics can be enjoyed between those of the FBG for coupling the Bragg-reflected light (backward) to the fundamental mode and the SFBG for coupling the same to the clad mode, and the high blocking quantity can be retained by combining the function of the FBG and the function of the SFBG.

According to the invention, there is further provided a multiple series FBG, which comprises: a third refractive index grating portion formed on the core of an optical fiber to have a grating vector in parallel with the fiber principal axis thereby to reflect incident light selectively with a reflection factor of substantially 100 % or more and to make the loss due to the coupling to a clad mode, less than 5 dB; and at least any one of such a fourth refractive index grating portion, the aforementioned first refractive index grating portion and the aforementioned second refractive index grating portion formed in series with the third refractive index grating portion, as has a grating vector slanted with respect to the fiber principal axis thereby to reflect incident light selectively with a reflection factor less than 10 % and to make the loss due to the coupling to a clad mode, 5 dB or more.

According to the invention, there is further provided a multiple series FBG, which comprises: the aforementioned fourth refractive index grating portion formed in the core of an optical fiber; and at least any one of the aforementioned first to fourth refractive index grating portions formed in series with the fourth refractive index grating portion.

According to the invention, there is further provided a multiple series FBG, which comprises: the first refractive index grating portion formed in the core of an optical fiber; and at least any one of the aforementioned first to fourth refractive index grating portions formed in series with the first refractive index grating portion.

According to the invention, there is further provided a multiple series FBG, which comprises: the aforementioned second refractive index grating portion formed in the core of an optical fiber; and at least any one of the aforementioned first to fourth refractive index grating portions in series with the second refractive index grating portion.

These multiple series FBGs of the invention have a function to couple the multiplexly reflected light highly efficiently to the clad mode, and are enabled to improve the blocking characteristics better than the FBG or SFBG of the prior art by combining the coupling to the fundamental mode (backward) and the coupling to the clad mode.

According to the invention, there is further provided a multiple series FBG, which comprises: the aforementioned first refractive index grating portion or the aforementioned second refractive index grating portion having a predetermined slant angle and formed in the core of an optical fiber; and the aforementioned first refractive index grating portion or the aforementioned second refractive index grating portion having a slant angle of an inverse sign opposite to that of the first-named slant angle and formed in series with the aforementioned first or second refractive index grating portion.

According to the multiple series FBGs of the invention, the multiplexly reflected light can be transformed highly efficiently into the clad mode thereby to improve the blocking characteristics further.

Next, the optical fiber type coupler of the invention is provided with a port, which includes any of the aforementioned QSFBGs or the multiple series FBGs.

According to the optical fiber type coupler of the invention, the COM port constructing the optical fiber type coupler includes the QSFBG or the multiple series FBG. Therefore, the coupler can retain a large blocking quantity and can construct the WDM transmission system simply and inexpensively.

According to the optical connector of the invention, moreover, any of the aforementioned QSFBGs and the multiple series FBGs is packaged in the optical connector.

According to the optical connector of the invention, on the other hand, the QSFBG of the invention or the

EP 1 544 645 A1

multiple series FBG is packaged in the ferrule so that it is made into the plug type. It is, therefore, possible to retain the high blocking quantity and to connect the optical connector removably to another connector arranged in the optical transmission line thereby to configure the WDM transmission system simply and inexpensively. The optical connector can retain a sufficient band blocking quantity.

Brief Description of the Drawings

Fig. 1 is a longitudinal section of a QSFBG according to a first embodiment of the invention.
Fig. 2 is an explanatory diagram showing transparent characteristics of the QSFBG according to the first embodiment of the invention.
Fig. 3 is a longitudinal section of a multiple series FBG according to a second embodiment of the invention.
Fig. 4 is an explanatory diagram showing reflective characteristics of the multiple series FBG according to the second embodiment of the invention.
Fig. 5 is a longitudinal section according to another embodiment of the multiple series FBG of the invention.
Fig. 6 is a longitudinal section according to another embodiment of the multiple series FBG of the invention.
Fig. 7 is a schematic diagram of an optical fiber type coupler of the invention.

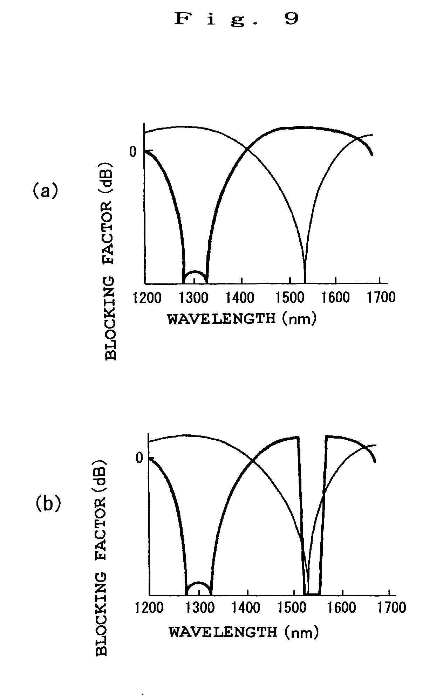

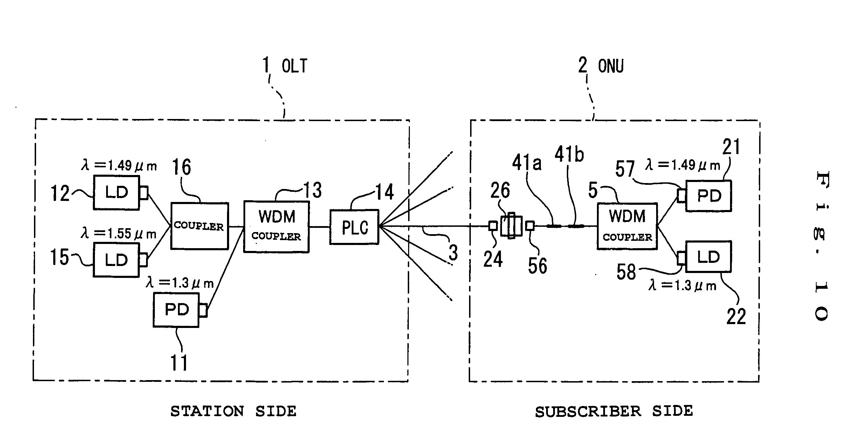

Of Figs. 8(a) to 8(e) presenting explanatory diagrams showing a procedure for manufacturing the optical fiber type coupler of the invention: Fig. 8(a) is an explanatory diagram showing the state, in which first and second refractive index grating portions are mounted on one of two optical fiber cores; Fig. 8 (b) is an explanatory diagram showing the state, in which the two optical fibers are fused and extended to form an optical branching coupler; Fig. 8 (c) is an explanatory diagram showing the state, in which a portion of the other optical fiber core is cut out; Fig. 8(d) is a side elevation showing the state, in which the optical branching coupler is packaged; and Fig. 8(e) is a section taken along line A - A of Fig. 8(d).
Of Figs. 9(a) and 9(b) presenting explanatory diagrams showing the blocking characteristics of the optical fiber type coupler of the invention, Fig. 9(a) is an explanatory diagram showing the blocking characteristics of the optical fiber type coupler of the prior art, and Fig. 9 (b) is an explanatory diagram showing the blocking characteristics of the optical fiber type coupler of the invention.

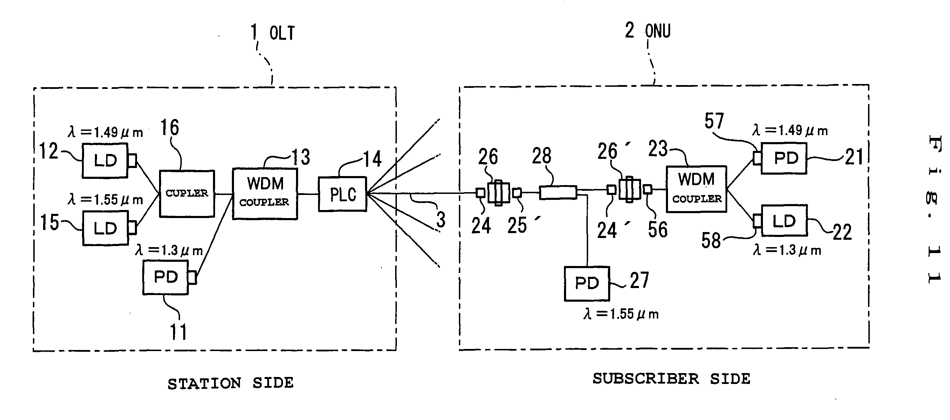

Fig. 10 is a system configuration diagram, in which the optical fiber type coupler of the invention is applied to the FTTH system requiring no image delivery.
Fig. 11 is an FTTH system configuration diagram requiring the image delivery, which can be configured by replacing the optical fiber type coupler of the invention contained in the system configuration of Fig. 10 by the WDM coupler of the prior art.

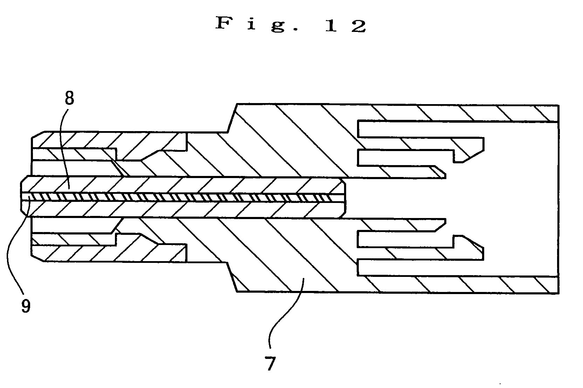

Fig. 12 is a longitudinal section of an optical connector of the invention.

Best Mode for Carrying Out the Invention

Preferred embodiments of the QSFBG, the multiple series FBG, the optical fiber type coupler and the optical connector of the present invention will be described with reference to the accompanying drawings.

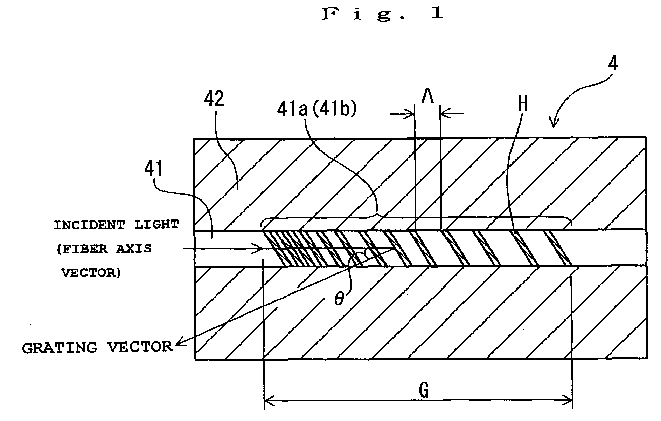

Fig. 1 is a longitudinal section of a QSFBG according to a first embodiment of the invention. In Fig. 1, the QSFBG of the invention comprises an optical fiber 4 including a core 41 composed mainly of quartz glass, and a clad 42 formed on the outer circumference of the core 41 and having a smaller refractive index than that of the core 41. In this core 41, a first refractive index grating portion 41a or a second refractive index grating portion 41b is made such that the grating gap gradually varies along an optical axis and such that the grating vector slopes with respect to the fiber primary axis. Specifically, the phase mask (not-shown) is so arranged on the outer side of the optical fiber 4 as to slope with respect to the axis of the optical fiber 4, and this phase mask is irradiated from the outside with the ultraviolet ray (not-shown) . As a result, the first refractive index grating portion 41a or the second refractive index grating portion 41b is formed at such a predetermined portion of the core 41 that the grating gap gradually varies along the optical axis and that the grating vector slopes with respect to the fiber principal axis.
Here, the first refractive index grating portion 41a or the second refractive index grating portion 41b is so desired that it varies along the optical transmission direction from the longer wavelength region to the shorter wavelength region. As a result, the signal light coming from the side of the longer wavelength region is transformed at the grating into the clad mode, and the reflected light is not propagated in the core so that the reflection in the blocking region can be inhibited.
The QSFBG thus far described is manufactured in the following specific procedure.
Specifically, the optical fiber 4 having a clad diameter of 125 $\mu$m was made by adding Ge to the core 41 having a core diameter of 8 μm and a relative refractive index difference of 0.3 %, and the QSFBG having a slant angle (θ) of 2° was formed in the optical fiber 4 by a phase mask method using the second higher harmonics of Ar ion laser (λ = 244 nm). Here, the central period (2A) of the plasma mask of a chirped grating is 1,076 nm, the chip rate (C) of the period is 0.56 nm/mm, the length (G) of the first and second index grating portions 41a and 41b is 20 mm, the effective refractive index (N) of the first and second index grating portions 41a and 41b is 1.447, and the refractive index modulation is $3 \times 10^{-3}$.

In the aforementioned embodiment having a slant angle (θ) of 0.2 to 2° and a blocking quantity of 10 dB or more, the QSFBG having the first refractive index grating portion 41a for reflecting the incident light in a reflection factor of 90 % or more and for making the loss due to the coupling in the clad mode less than 5 dB will be called the "QSFBG of the first kind". In the case having a slant angle of 1 to 3° and a blocking quantity of 10 dB or more, the QSFBG having the second refractive index grating portion 41b for reflecting the incident light in a reflection factor of 10 % or more and for making the loss due to the coupling in the clad mode 5 dB or more will be called the "QSFBG of the second kind". Here, the slant angle (θ) is the angle which is made between the fiber axis vector (or the incident light) and the grating vector of the case, in which the incident light is reflected in the higher refractive index region (H).

Here, the QSFBG of the first kind is made to have a reflection factor of 90 % or more, because it is intended to cause a reflection (i.e., substantially the total reflection) as high as that of the ordinary FBG (i.e., a third refractive index grating) . On the other hand, the QSFBG of the first kind is made to have a loss less than 5 dB due to the coupling to the clad mode, because it is intended to make the loss equivalent to that of the coupling to the clad mode, as observed in the ordinary FBG. Moreover, the QSFBG of the second kind is made to have a reflection index of 10 % or more, because it is intended to utilize the "reflection" as a function. On the other hand, the QSFBG of the second kind is made to have a loss of 5 dB or more due to the coupling to the clad mode, because it is intended to make the loss higher than that due to the coupling to the clad mode, as seen in the ordinary FBG.

The reflection factor of the aforementioned FBG or the single QSFBG and the SFBG (as will be called the "FBG group") of the first kind or the second kind can be measured by Method 1 (using an optical branching device) or Method 2 (using an optical circulator and a full reflection terminal), as specified in Item 6.5 of the receiving part testing method for JISC5901$^{-2001}$ optical transmissions, by using a wide band light source of a high output such as an ASE (Amplified Spontaneous Emission) light source, an SLD (Super Luminescence Diode) light source or an EELED (Edge Emission Light-Emitting Diode) light source, or a variable wavelength laser light source such as a low SSE (Source Spontaneous Emission), as the light source, and by using an optical spectrum analyzer capable of measuring the wavelength characteristics as a power meter. Here, a terminal having a known reflection factor may be used in Method 2 as the full reflection terminal. Moreover, the loss due to the coupling of the FBG group to the single clad mode can be calculated by the following Formula in the case of the FBG group of a wide band having the Chirp:

$$CML = (RL_2(\lambda) - RL_1(\lambda))/2,$$

wherein:

   CML(λ): Loss due to the coupling to the clad mode;
   RL1(λ): Reflection attenuation (spectral) obtained by introducing the test light in the Chirp direction (from the shorter grating gap); and
   RL2(λ): Reflection attenuation (spectral) obtained by introducing the test light reversely of the Chirp direction (from the longer grating gap).

In the above Formula, the difference between the two measured values indicates the contribution to the loss due to the coupling to the clad mode. Specifically, the loss due to the coupling to the clad mode is caused in the wavelength range shorter by several nm than the Bragg wavelength. Therefore, the test light is subject, when it is incident from the Chirp direction, not to the loss due to the coupling to the clad mode, but to the Bragg reflection. In the case, however, the test light is incident in the reverse direction, it is subject to the loss due to the coupling to the clad mode till it reaches the Bragg reflection point (that is, the test light is subject to the loss due to the coupling because it passes through the region having a Bragg wavelength longer by several nm than that wavelength, i.e., through the region, in which the loss due to the coupling to the clad mode is given to that wavelength) . Thus, the difference between the two measured values indicates the contribution of the loss to the coupling to the clad mode. The reason why the difference is divided by 2 is that the test light reciprocates for the reflection measurement through the section, in which the loss due to the coupling to the clad mode is given, so that the light is doubly subject to the effects of the loss due to the coupling to the clad mode.

The QSFBG of the first kind or the second kind thus far described according the first embodiment has intermediate characteristics between those of the ordinary FBG and the SFBG of the prior art, and is enabled to retain a high blocking quantity by combining the function of the ordinary FBG, i.e., the function to transform (or reflect) the incident light propagating in the fundamental mode into the fundamental mode in the reverse direction, and the function of the SFBG of the prior art, i.e., the function to couple the reflected light to the clad mode. Especially the QSFBG of the second kind is given higher blocking characteristics than those of the FBG or the SFBG by the action to combine the coupling to the fundamental mode and the coupling to the clad mode.

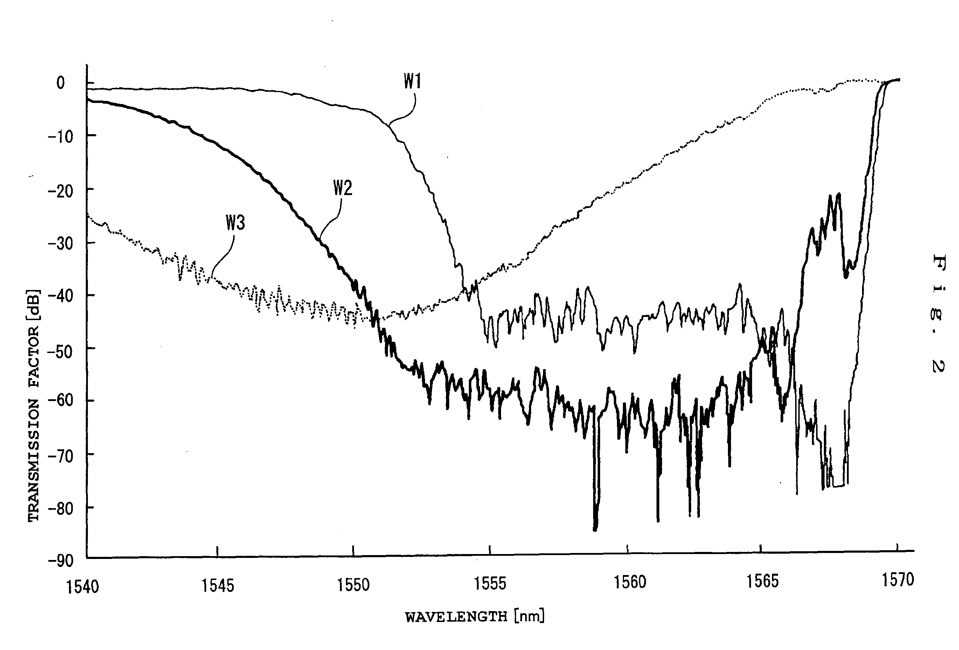

Fig. 2 shows relations between the FBG and the SFBG of the prior art and the transmission spectrum of the QSFBG of the second kind according to the first embodiment of the invention, i.e., between the input wavelength (nm) and the transmission factor (dB). In Fig. 2: a thin curve W1 indicates the characteristics of the FBG of the prior art having a slant angle ($\theta$) of 0°; a thick curve W2 indicates the characteristics of the QSFBG of the second kind of the invention having a slant angle ($\theta$) of 2°; and a dotted curve W3 indicates the characteristics of the SFBG of the prior art having a slant angle ($\theta$) of 4°. It is understood from Fig. 2 that the QSFBG of the second kind of the invention can block the optical signal within a range of about 40 to 80 dB in a band of 1,550 to 1,565 nm.

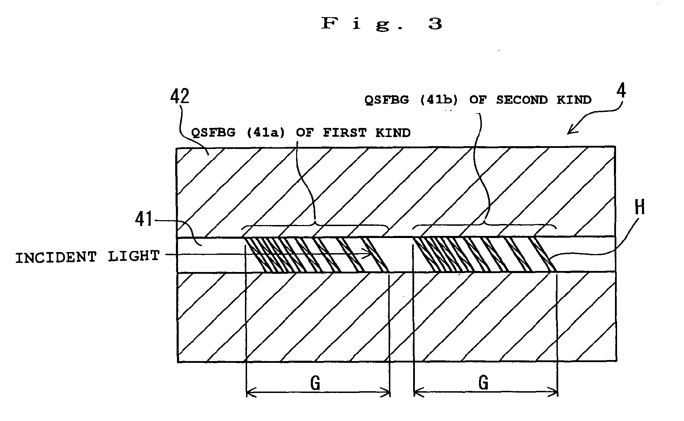

Fig. 3 is a longitudinal section of a multiple series FBG according to a second embodiment of the invention. In Fig. 3, the portions common to those of Fig. 1 are omitted in description by designating them by the identical reference characters. In Fig. 3, the multiple series FBG of the invention comprises an optical fiber 4 including a core 41 composed mainly of quartz glass, and a clad 42 formed on the outer circumference of the core 41 and having a smaller refractive index than that of the core 41. In this core 41, the aforementioned QSFBGs of the first kind are the second kind (i.e., the first or second refractive index grating portion 41a or 41b) are formed in series in the following manner. Like the first embodiment, specifically, the phase mask is so arranged on the outer side of the optical fiber 4 as to slope with respect to the axis of the optical fiber 4, and this phase mask is irradiated from the outside with the ultraviolet ray. As a result, the QSFBG of the first kind (i.e., the first refractive index grating portion 41a) is formed at a predetermined portion of the core 41. Next, the QSFBG of the second kind (i.e., the second refractive index grating portion 41b) is formed by shifting the optical fiber 4 of this state in the axial direction and by irradiating it as mentioned before with the ultraviolet ray.

As in the first embodiment, the QSFBGs of the first kind and the second kind (i.e., the first or second refractive index grating portion 41a or 41b) are made such that the grating gap gradually varies along the propagation direction of the light from the longer wavelength range to the shorter wavelength range, and such that a flat region of about 1 mm (i.e., a region having no grating written therein) is formed between the QSFBG of the first kind (i.e., the first refractive index grating portion 41a) and the QSFBG of the second kind (i.e., the second refractive index grating portion 41b).

Specifically, the multiple series FBG thus far described according to the second embodiment is manufactured in the following specific procedure.

Specifically, the optical fiber 4 having a clad diameter of 125 $\mu$m was made by adding Ge to the core 41 having a core diameter of 8 $\mu$m and a relative refractive index difference of 0.3 %, and the QSFBGs of the first kind and the second kind (i.e., the first and second refractive index grating portions 41a and 41b) having a slant angle ($\theta$) of 2° were formed in series in the optical fiber 4 by the phase mask method using KrF excimer laser ($\lambda$ = 248 nm). Here, the central period ($2\Lambda$) of the plasma mask of a chirped grating is 1,140 nm, the chip rate (C) of the period is 1.2 nm/mm, the length (G) of the QSFBGs of the first kind and the second kind (i.e., the first and second index grating portions 41a and 41b) is 8 mm, the effective refractive index (N) of the QSFBGs of the first kind and the second kind (i.e., the first and second index grating portions 41a and 41b) is 1.447, and the refractive index modulation is $3 \times 10^{-3}$. In the afore-mentioned embodiment, the gap between the QSFBGs of the first kind and the second kind (i.e., the first and second refractive index grating portions 41a and 41b) is set at 1 mm but may be modified to 200 mm or less , such as several to several tens mm.

According to the second embodiment thus far described, the multiple series FBG has higher blocking characteristics than those of the FBG or the SFBG of the prior art so that it can retain the high reflection factor. Moreover, the multiple series FBG can transform the multiplexly reflected light highly efficiently into the clad mode thereby to inhibit the beat generation. The multiple series FBG can have higher blocking characteristics, especially in the case two QSFBGs of the second kind are connected in two steps, as will be described hereinafter.

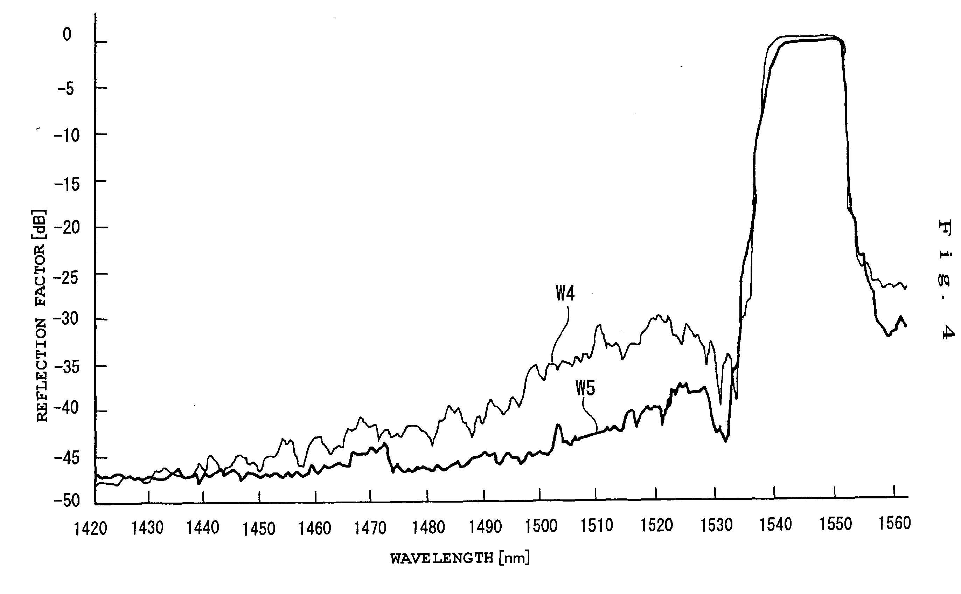

Fig. 4 shows relations of the multiple series FBG according to the second embodiment, that is, the relations between the input wavelength (nm) and the reflection factor (dB).

In Fig. 4, a thin curve indicates the FBG (i.e., a one-step FBG) of the prior art, and a thick curve indicates the multiple series FBG according to the second embodiment. It is understood from Fig. 4 that the signal in the band of 1,540 to 1,560 nm is reflected approximately by 100 % in the multiple series FBG of the invention, but that the reflection outside of the band near the Bragg wavelength is low.

The foregoing embodiments have described the case, in which the two QSFBGs of the slant angle ($\theta$) of 2° are connected at two steps. However, this two-step connection may also be made by combining the FBG, the SFBG and the QSFBGs of the first kind and the second kind, as will be described hereinafter.

Table 1 enumerates the modes of combination of the two-step connection of the FBG, the SFBG and the QSFBGs, and their functions.

[Table 1]

| Sampl e No. | Front Step | Rear Step | Blocking Quantity | Reflection Factor | Multiplex Reflection |
|---|---|---|---|---|---|
| 1 | FBG | FBG | Medium | High | YES |
| 2 | FBG | First Kind QSFBG | Medium | High | NO |
| 3 | FBG | Second Kind QSFBG | Medium-Larg e | High | NO |
| 4 | FBG | SFBG | Medium | High | NO |
| 5 | First Kind QSFBG | FBG | Medium | High | NO |
| 6 | First Kind QSFBG | First Kind QSFBG | Medium | High | NO |
| 7 | First Kind QSFBG | Second Kind QSFBG | Medium-Larg e | High | NO |
| 8 | First Kind QSFBG | SFBG | Medium | High | NO |
| 9 | Second Kind QSFBG | FBG | Medium-Larg e | High | NO |
| 10 | Second Kind QSFBG | First Kind QSFBG | Medium-Larg e | High | NO |
| 11 | Second Kind QSFBG | Second Kind QSFBG | Large | High | NO |
| 12 | Second Kind QSFBG | SFBG | Medium-Larg e | High | NO |
| 13 | SFBG | FBG | Medium | Low-Medium | NO |
| 14 | SFBG | First Kind QSFBG | Medium | Low-Medium | NO |
| 15 | SFBG | Second Kind QSFBG | Medium-Large | Low-Medium | NO |
| 16 | SFBG | SFBG | Medium | Low | NO |

It is understood from Table 1 that Samples Nos. 2 to 16 can couple the multiplex reflection, as might otherwise occur in the case of the two-step connection of the FBG, into the clad mode, and that especially Sample Nos. 3, 7 and 9 to 12 have higher blocking quantities and higher reflection factors than those of the others.

Here are examined the characteristics of the two-step connections of the main FBGs. In the first case of Sample No. 1, in which two FBGs of the same design are formed in series, the blocking quantity is medium, and the reflection factor is high. However, there is a drawback for Sample No. 1 that it receives the multiplex reflections between the FBG of the front step and the FBG of the rear FBG to cause the Fabry-Perot resonance so that the ripple appears in the spectral characteristics. In the case of Sample No. 16, in which two SFBGs of the same construction are formed in series, the blocking quantity is medium, and the two SFBGs do not receive the multiplex reflection. However, the SFBG itself has action to transform the fundamental mode into the clad mode, so that the coupling to the fundamental mode is hardly made to lower the reflection factor. This low reflection factor is advantageous in a transmission system disliking the reflection, but is disadvantageous in a transmission system positively utilizing the reflection of a line monitoring light in a light monitoring system. In the case the SFBG is made by using the ordinary single mode fiber, it is difficult to raise the coupling efficiency to the clad mode and accordingly to retain a high blocking quantity.

Next, in the case of Sample No. 4, in which the FBG and the SFBG are formed in series at the front step and at the rear step, respectively, a high reflection factor is obtained so that an advantage is gained at the transmission system requiring the reflected light. However, the SFBG at the rear step has a narrow band width thereby to restrict the band which can be wholly used.

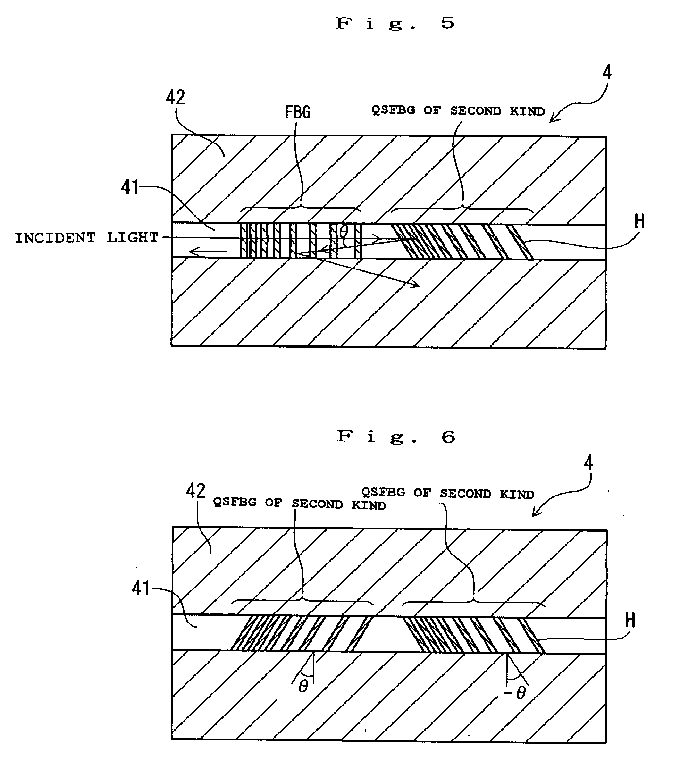

Subsequently, in the case of Sample No. 2, in which the FBG and the QSFBG of the first kind are formed in series at the front step and at the rear step, respectively, as shown in Fig. 5, a high reflection factor is obtained like in the aforementioned Sample No. 4 thereby to gain an advantage at the transmission system requiring the reflected light. Moreover, the QSFBG of the first kind is connected to the rear step so that the multiplexly reflected light can be transformed highly efficiently into the clad mode thereby to gain an advantage to inhibit the beat generation. Specifically, most of the light having a wavelength identical to the Bragg wavelength of the FBG is coupled to the fundamental mode in the reverse direction by the FBG at the front step, as shown in Fig. 5. However, a portion of the light transmits through the FBG at the front step, and this transmitted light is reflected on the QSFBG of the first kind at the rear step. This reflected light is reflected in a direction making an angle of $(\pi - 2\theta)$ (wherein $\theta$ is the "slant angle"), and is transformed highly efficiently into the clad mode by the FBG at the front step thereby to inhibit the beat generation. In the case of Sample No. 6, in which two QSFBGs of the first kind having the same design are formed in series, a high reflection factor is obtained as in the aforementioned Sample No. 4 thereby to gain an advantage in the transmission system requiring the reflected light.

In the case of Sample No. 11, in which two QSFBGs of the second kind of the same design are connected at two steps, a high reflection factor is obtained as in the aforementioned Sample No. 6 thereby to inhibit the beat. By the combined action of the Bragg reflection and the coupling to the clad mode, it is possible to obtain a larger blocking quantity than that of the two-step connection of the other FBGs.

In Sample No. 11 if the relation of the slant angle $(\theta)$ between the QSFBG of the second kind at the front step and the QSFBG of the second kind at the rear step is optimized, that is, if the slant angle $(\theta)$ of the QSFBG of the second kind at the front step is set to about $2°$ whereas the slant angle $(\theta)$ of the QSFBG of the second kind at the rear step is set to have an inverse sign (about $-2°$), the multiplexly reflected light is coupled highly efficiently to the clad mode so that the blocking characteristics can be synergistically improved to better ones.

Here, the aforementioned second embodiment has been described on the two-step connection of the FBGs, but three or more steps of FBGs may also be connected, if necessary.

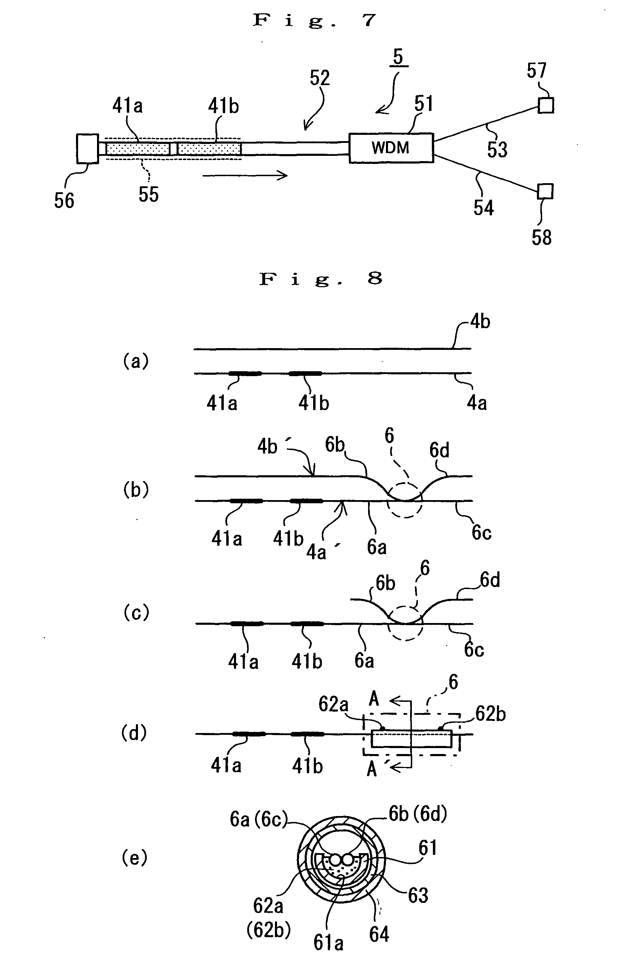

Fig. 7 is a schematic view of an optical fiber type coupler using the multiple series FBG according to the second embodiment. In Fig. 7, the portions common to those of Fig. 3 are omitted in description by designating them by the identical reference characters.

In Fig. 7, an optical fiber type coupler 5 of the invention comprises: a coupler body 51 for composing/dividing the waves of a rising signal (1,260 to 1,360 nm) and a falling signal (1,480 to 1,580 nm); a COM port 52 mounted on the input side of the coupler body 51; and first and second OUT ports 53 and 54 mounted on the output side of the coupler body. Here, a first connector 56 is attached to the leading end portion of the optical fiber core constructing the COM port 52. A second connector 57 to be connected with the later-described PD (Photo Diode) is attached to the leading end portion of the optical fiber cover constructing the first OUT port 53 (as will be called the "1.55 port"). A third connector 58 to be connected with the later-described LD (Laser Diode) is attached to the leading end portion of the optical fiber core constructing the second OUT port 54 (as will be called the "1.3 port").

The optical fiber type coupler 5 thus constructed can be manufactured, as shown in Fig. 8. In Fig. 8, the portions common to those of Fig. 3 and Fig. 7 are designated by the identical reference characters.

First of all, two resin coated optical fibers 4a and 4b are prepared by coating the optical fibers of a single mode therearound with a resin, as shown in Fig. 8(a). The first and second refractive index grating portions 41a and 41b are formed in series on the core of one resin coated optical fiber 4a by a method similar to the aforementioned one. Then, the two resin coated optical fibers 4a and 4b are cleared of the resin coating at their middle portions thereby to expose optical fibers 4a' and 4b'.

Next, the two optical fibers 4a' and 4b' are fused and extended by melting them with a micro burner device, and this extension is stopped at a predetermined branching ratio. As a result, there are obtained an optical branching coupler 6 and first to fourth optical fiber portions 6a to 6d which extend from the both sides of the coupler 6, as shown in Fig. 8(b). Here, the other optical fiber 4b' to be joined to the second optical fiber portion 6b is cut, as shown in Fig. 8(c).

Next, the optical branching coupler 6 and the first to fourth optical fiber portions 6a to 6d are fitted in a groove 61a formed in a package substrate 61 made of pure quartz, as shown in Figs. 8(d) and 8(e). At the same time, the first to fourth optical fiber portions 6a to 6d are fixed in the package substrate 61 through adhesives 62a and 62b and are fitted in a stainless steel tube 63. This stainless steel tube 63 is provided on its circumference, if necessary, with a protective tube 64 such as a shrinkable tube. As a result, it is possible to manufacture the optical fiber type coupler 5 which has the COM port 52, the 1.55 port 54 and the 1.3 port 54.

Fig. 9(a) shows the blocking characteristics of the optical fiber type coupler of the prior art, and Fig. 9 (b) shows the blocking characteristics of the optical fiber type coupler of the invention. In Fig. 9(a) and Fig. 9(b), a thin curve indicates the blocking characteristics of the 1.3 port, and a thick curve indicates the blocking characteristics of the 1.55 port.

In the optical fiber type coupler of the prior art, it is understood from Fig. 9(a) that the 1.3 port transmits approximately 100 % of the signal having a band of 1.3 nm but not the signal having a band of 1.55 nm, and that the 1.55 port transmits approximately 100 % of the signal having a 1.55 nm band but hardly transmits the signal having a band of 1.3 nm.

In the optical fiber type coupler of the invention, on the contrary, it is understood from Fig. 9(b) that the 1.3 port has blocking characteristics like those of the optical fiber type coupler of the prior art, but that the 1.55 port hardly transmits the signal having a band of 1.3 nm whereas the signal is cut out in the band of 1.55 nm.

Here, the foregoing embodiments have been described on the case using the multiple series FBG according to the second embodiment, but the QSFBG of the first kind or the QSFBG of the second kind according to the first embodiment may also be used.

Fig. 10 is a system configuration diagram of a WDM transmission system of the case, in which the optical fiber type coupler of the invention is applied to an optical subscriber access system of the FTTB (Fiber To The Building). In Fig. 10 and Fig. 11, the portions common to those of Fig. 3, Fig. 7 and Fig. 8 are omitted in detailed description by designating them by the identical reference characters.

In Fig. 10, the WDM transmission system comprises: an optical line terminal (as will be called the "OLT") installed on a station side; and a plurality of optical network units (as will be called the "ONU") installed on a subscriber side. The OLT 1 and each ONU 2 are connected through an optical transmission line 3 made of a single-mode optical fiber core. In Fig. 10 and Fig. 11, only one ONU 2 is shown to simplify the description.

The OLT 1 includes: a receiving PD (as will be called the "station side PD") 11 for receiving a rising signal having a band of 1. 3 $\mu$m; a transmitting LD (as will be called the "first station side LD") 12 for transmitting a falling signal having a band of 1.49 $\mu$m; a transmitting LD (as will be called the "second station side LD") 15 for transmitting a falling signal having a 1.55 $\mu$m band; a WDM coupler (as will be called the "station side WDM coupler) 13 for composing/dividing two rising/falling wavelengths; a PLC (Plain Light Carrier) splitter 14; and a coupler 16. On the other hand, the ONU 2 includes: a receiving PD (as will be called the "first subscriber side PD") 21 for receiving the falling signal having a band of 1.49 $\mu$m; a transmitting LD (as will be called the "subscriber side LD") 22 for transmitting the rising signal having a band of 1.3 $\mu$m; and the optical fiber type coupler (as will be called the "subscriber side WDM coupler") 5 of the invention.

Here, the first station side LD 12 and the second station side LD 15 are connected with the coupler 16, with which the station side WDM coupler 13 is connected. Moreover, the station side PD 11 is connected with the station side WDM coupler 13, with which the PLC splitter 14 is connected. Next, the second connector 57 and the third connector 58 of the subscriber side WDM coupler 5 are connected with the subscriber side PD 21 and the subscriber side LD 22, respectively. Moreover, the first connector 56 of the subscriber side WDM coupler 5 is connected with an adapter 26, with which a fourth connector 24 is connected. Moreover, the PLC splitter 14 is connected with the fourth connector 24 through the optical transmission line 3.

In the WDM transmission system thus configured, the fiber Bragg grating and the coupler in the transmission line are integrated, that is, the first and second refractive index grating portions 41a and 41b are formed in series in the core of the optical fiber constructing the COM port of the subscriber side WDM coupler 5, so that the falling signal having a band of 1.55 nm can be blocked. On the other hand, the signal light incident from the longer wavelength side is reflected at the slant type grating, and the reflected light is not propagated in the core 41 so that the reflection in the blocking region can be inhibited.

According to the WDM transmission system of the invention, therefore, an FTTH (Fiber To The Home) requiring no "image delivery" can be configured simply and inexpensively by connecting the optical fiber type coupler 5 removably with the adapter or connector of the optical transmission line configuring the current FTTB system.

In the case the FTTH system requiring no "image delivery" is switched to an FTTH system requiring the "image delivery" , it is sufficient, as shown in Fig. 11, to connect an optical fiber type coupler 23 in place of the optical fiber type coupler 5 of the invention, to connect the first connector 56 with a filter (or coupler) 28 through a second adapter 26' and a fifth connector 24', to connect a second subscriber side PD 27 for receiving the falling signal having a band of 1. 55 $\mu$m with that filter (or coupler) 28, and to connect the filter (or coupler) 28 with the adapter 26 through a sixth connector 25'.

As a result, the FTTH requiring no "image delivery" can be switched easily and inexpensively to the FTTH system requiring the "image delivery".

Here, the foregoing embodiments have been described on the case, in which the first and second refractive index grating portions 41a and 41b are formed on the side of the COM port, but the grating portions 41a and 41b may also be formed on the side of the 1.55 port.

Fig. 12 is a longitudinal section of an SC type PAD connector using the QSFBG of the first kind or the QSFBG of the second kind according to the first embodiment, or the multiple series type FBG according to the second embodiment. In Fig. 12, the SC type PAD connector is provided with a housing 7, a ferrule 8 is arranged at the central portion on one end side in the housing 7. In this ferrule 8, moreover, there is mounted any of the QSFBG of the first kind, the QSFBG of the second kind and the multiple series FBG thus far described. This embodiment is provided with a multiple series FBG 9. Here, this optical connector is formed into a male construction on its one end side and a female construction on its the other end side.

According to this embodiment, the multiple series FBG 9 or the like is mounted in the ferrule so that it is made into a plug type. Therefore, the optical connector can be removably connected to another connector arranged in the optical transmission line. Moreover, the WDM transmission system can be configured simply and inexpensively. In the case the optical connector is connected to the leading end portion of the COM port, moreover, it can be removably connected to a connector which is arranged on the side of the optical network device of the optical transmission line.

Industrial Applicability

According to the QSFBG of the invention, as apparent from the description thus far made, the one-step FBG can have intermediate characteristics between those of the FBG and the SFBG, and a high blocking quantity can be retained by combining the function of the FBG and the function of the SFBG. According to the multiple series FBG of the invention, on the other hand, the reflection outside the band near the Bragg wavelength can be reduced to transform the multiplex reflection into the clad mode thereby to inhibit the beat generation. According to the optical fiber type coupler of the invention, moreover, the COM port configuring the optical fiber type coupler is provided with the QSFBG of the invention or the multiple series FBG. It is, therefore, possible to retain the high blocking quantity and to configure the WDM transmission system simply and inexpensively. According to the optical connector of the invention, on the other hand, the QSFBG of the invention or the multiple series FBG is packaged in the ferrule so that it is made into the plug type. It is , therefore, possible to retain the high blocking quantity and to connect the optical connector removably to another connector arranged in the optical transmission line thereby to configure the WDM transmission system simply and inexpensively.

**Claims**

1. A quasi slanted fiber Bragg grating **characterized by** comprising a first refractive index grating portion formed on the core of an optical fiber to have a grating vector slanted with respect to the fiber principal axis thereby to reflect incident light selectively with a reflection factor of 90 % or more and to make the loss due to the coupling to a clad mode, less than 5 dB.

2. A quasi slanted fiber Bragg grating **characterized by** comprising a second refractive index grating portion formed on the core of an optical fiber to have a grating vector slanted with respect to the fiber principal axis thereby to reflect incident light selectively with a reflection factor of 10 % or more and to make the loss due to the coupling to a clad mode, 5 dB or more.

3. A multiple series fiber Bragg grating **characterized by** comprising: a third refractive index grating portion formed on the core of an optical fiber to have a grating vector in parallel with the fiber principal axis thereby to reflect incident light selectively with a reflection factor of substantially 100 % or more and to make the loss due to the coupling to a clad mode, less than 5 dB; and at least any one of such a fourth refractive index grating portion, the first refractive index grating portion of Claim 1 and the second refractive index grating portion of Claim 2 formed in series with the third refractive index grating portion, wherein the fourth refractive index grating portion has a grating vector slanted with respect to the fiber principal axis thereby to reflect incident light selectively with a reflection factor less than 10 % and to make the loss due to the coupling to a clad mode, 5 dB or more.

4. A multiple series fiber Bragg grating **characterized by** comprising: the fourth refractive index gratingportion of Claim 3 formed in the core of an optical fiber; and at least any one of the first refractive index grating portion of Claim 1, the second refractive index grating portion of Claim 2, the third refractive index grating portion of Claim 3 and the fourth refractive index grating portion of Claim 3 formed in series with the fourth refractive index grating portion.

5. A multiple series fiber Bragg grating **characterized by** comprising: the first refractive index grating portion of Claim 1 formed in the core of an optical fiber; and at least any one of the first refractive index grating portion of Claim 1, the second refractive index grating portion of Claim 2, the third refractive index grating portion of Claim 3 and the fourth refractive index grating portion of Claim 3 formed in series with the first refractive index grating portion.

6. A multiple series fiber Bragg grating **characterized by** comprising: the second refractive index gratingportion of Claim 2 formed in the core of an optical fiber; and at least any one of the first refractive index grating portion of Claim 1, the second refractive index grating portion of Claim 2, the third refractive index grating portion of Claim 3 and the fourth refractive index grating portion of Claim 3 formed in series with the second refractive index grating portion.

7. A multiple series fiber Bragg grating **characterized by** comprising: the first refractive index grating portion of Claim 1 or the second refractive index grating portion of Claim 2 having a predetermined slant angle and formed in the core of an optical fiber; and the first refractive index grating portion or the second refractive index grating portion having a slant angle of an inverse sign opposite to that of the first-named slant angle and formed in series with the first refractive index grating portion or the second refractive index grating portion.

8. An optical fiber type coupler comprising a port, **characterized in that** saidport includes either the quasi slanted fiber Bragg grating of Claim 1 or Claim 2, or any one of the multiple series fiber Bragg gratings of Claim 3 to Claim 7.

9. An optical connector **characterized by** comprising either the quasi slanted fiber Bragg grating of Claim 1 or Claim 2, or any one of multiple series fiber Bragg gratings of Claim 3 to Claim 7 packaged therein.

Fig. 1

Fig. 2

EP 1 544 645 A1

F i g . 3

42

QSFBG (41b) OF SECOND KIND    4

QSFBG (41a) OF FIRST KIND

41

INCIDENT LIGHT

H

G      G

Fig. 4

## Fig. 5

## Fig. 6

Fig. 7

Fig. 8

(a)

(b)

(c)

(d)

(e)

Fig. 9

(a)

(b)

Fig. 10

# Fig. 11

2 ONU — SUBSCRIBER SIDE

- 21 PD λ=1.49μm
- 22 LD λ=1.3μm
- 57
- 58
- 23 WDM COUPLER
- 26′ 56
- 24′
- 27 PD λ=1.55μm
- 28
- 25′
- 26 24

3

1 OLT — STATION SIDE

- 14 PLC
- 13 WDM COUPLER
- 16 COUPLER
- 11 PD λ=1.3μm
- 12 LD λ=1.49μm
- 15 LD λ=1.55μm

Fig. 12

## INTERNATIONAL SEARCH REPORT

| | International application No. |
|---|---|
| | PCT/JP03/10571 |

A. CLASSIFICATION OF SUBJECT MATTER
Int.Cl⁷ G02B6/10

According to International Patent Classification (IPC) or to both national classification and IPC

B. FIELDS SEARCHED

Minimum documentation searched (classification system followed by classification symbols)
Int.Cl⁷ G02B6/10

Documentation searched other than minimum documentation to the extent that such documents are included in the fields searched
Jitsuyo Shinan Koho          1922–1996    Toroku Jitsuyo Shinan Koho    1994–2003
Kokai Jitsuyo Shinan Koho    1971–2003    Jitsuyo Shinan Toroku Koho    1996–2003

Electronic data base consulted during the international search (name of data base and, where practicable, search terms used)
JOIS(JSTPLUS)

C. DOCUMENTS CONSIDERED TO BE RELEVANT

| Category* | Citation of document, with indication, where appropriate, of the relevant passages | Relevant to claim No. |
|---|---|---|
| Y | MOREY W.W. et al., Mode-coupling characteristics of UV-written Bragg gratings in depressed-cladding fibre., In: ELECTRONICS LETTERS, 28th April, 1994, Vol.30, No.9, pages 730 to 732 | 1,3-6,8,9 |
| Y | WO 99/27401 A1 (MINNESOTA MINING AND MANUFACTURING CO.), 03 June, 1999 (03.06.99), Full text; all drawings; particularly, Figs. 7(a) to (c) & US 6005999 A          & JP 2001-524689 A & CN 1279770 T | 1-6,8,9 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 27 November, 2003 (27.11.03) | Date of mailing of the international search report 09 December, 2003 (09.12.03) |
|---|---|
| Name and mailing address of the ISA/ Japanese Patent Office | Authorized officer |
| Facsimile No. | Telephone No. |

Form PCT/ISA/210 (second sheet) (July 1998)

**EP 1 544 645 A1**

## INTERNATIONAL SEARCH REPORT

International application No.

PCT/JP03/10571

C (Continuation). DOCUMENTS CONSIDERED TO BE RELEVANT

| Category* | Citation of document, with indication, where appropriate, of the relevant passages | Relevant to claim No. |
|---|---|---|
| Y | JP 10-160949 A (SUMITOMO ELECTRIC INDUSTRIES, LTD.), 19 June, 1998 (19.06.98), Full text; all drawings; particularly, Par. Nos. [0028], [0029]; Figs. 7 to 9 (Family: none) | 1-6,8,9 |
| Y | EP 1160594 A1 (LUCENT TECHNOLOGIES INC.), 05 December, 2001 (05.12.01), Full text; all drawings; particularly, Claims 1, 2; Figs. 4, 6 & JP 2002-48929 A & DE 60001812 D & KR 1109160 A & US 6427041 B1 | 2-6,8,9 |
| Y | US 6292606 B1 (ALCATEL), 18 September, 2001 (18.09.01), Full text; all drawings; particularly, column 8, lines 19 to 27 & EP 962790 A1 & FR 2779239 A1 & JP 2000-9941 A | 2-6,8,9 |
| Y | RIANT I. et al., New and efficient technique for suppressing the peaks induced by discrete cladding mode coupling in fiber slanted Bragg grating spectrum., In: Technical Digest of OFC 2000, TuH3, pages 118 to 120 | 2-6,8,9 |
| Y | JP 2001-51134 A (SUMITOMO ELECTRIC INDUSTRIES, LTD.), 23 February, 2001 (23.02.01), Full text; all drawings; particularly, Par. No. [0033]; Fig. 11 (Family: none) | 2-6,8,9 |
| Y | WO 01/98803 A1 (Fujikura Ltd.), 27 December, 2001 (27.12.01), Full text; all drawings; particularly, Figs. 25(a), (b), 26(a), (b) & GB 2379031 A | 2-6,8,9 |
| Y | Maki OMURA et al., "Fiber Grating-gata Kotaiiki Shadan Filter", Denshi Tsushin Gakkai Gijutsu Kenkyu Hokoku, Vol.101, No.583, (PS2001 78-94), pages 83 to 88 | 3-6,8,9 |
| Y | US 6321008 B1 (ALCATEL), 20 November, 2001 (20.11.01), Full text; all drawings; particularly, column 8, lines 15 to 32 & JP 2000-266945 A & EP 1022595 A1 & FR 2779237 A1 | 3-6,8,9 |

Form PCT/ISA/210 (continuation of second sheet) (July 1998)

**INTERNATIONAL SEARCH REPORT**

| International application No. |
| --- |
| PCT/JP03/10571 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | KASHYAP R. et al., WIDEBAND GAIN FLATTENED ERBIUM FIBRE AMPLIFIER USING A PHOTOSENSITIVE FIBRE BLAZED GRATING, In: ELECTRONICS LETTERS, 21 January, 1993 (21.01.93), Vol.29, No.2, pages 154 to 156 | 3-6,8,9 |
| | Akinori NIHONYANAGI et al., "Slant-gata Fiber Grating o Mochiita Ritoku Tokaki to Sono Shinraisei", Denshi Tsushin Gakkai Gijutsu Kenkyu Hokoku, Vol.102, No.88, (OPE2002 10-17), pages 1 to 4 | |
| Y | Full text; all drawings; particularly, Figs. 2, 4 | 3-6,8,9 |
| A | Full text; all drawings; particularly, Figs. 2, 4 | 7 |
| Y | WO 97/26571 A2 (BRITISH TELECOMMUNICATIONS PLC.), 24 July, 1997 (24.07.97), Full text; all drawings; particularly, Fig. 15 & JP 2000-503414 A | 3 |
| Y | US 5717798 A (LUCENT TECHNOLOGIES INC.), 10 February, 1998 (10.02.98), Full text; all drawings & JP 10-104460 A & EP 829741 A2 | 8 |
| Y | EP 774680 A1 (SUMITOMO ELECTRIC INDUSTRIES, LTD., NIPPON TELEGRAPH AND TELEPHONE CORP.), 21 May, 1997 (21.05.97), Column 14, line 52 to column 15, line 22; Figs. 4, 6 & JP 9-269435 A | 9 |
| A | JP 11-326666 A (Matsushita Research Institute Tokyo, Inc.), 26 November, 1999 (26.11.99), Full text; all drawings; particularly, Figs. 2, 5 (Family: none) | 3 |

Form PCT/ISA/210 (continuation of second sheet) (July 1998)